# EUROPEAN PATENT APPLICATION

(11) **EP 4 760 894 A1**
(43) Date of publication of application: **17.06.2026**
(21) Application number: 24904273.0
(22) Date of filing: 13.12.2024
(51) Int. Cl.: H01M 50/105, H01M 10/52, H01M 50/119, H01M 50/178, H01M 50/627, H01M 50/147

(54) **SECONDARY BATTERY**

(30) Priority: 15.12.2023 KR 20230183578; 04.12.2024 KR 20240178695
(71) Applicant: LG Energy Solution, Ltd., Seoul 07335 (KR)
(72) Inventor: CHOI, Ji Eun, Daejeon 34122 (KR); KIM, Sang Hun, Daejeon 34122 (KR); YU, Hyung Kyun, Daejeon 34122 (KR); LEE, Jae Ho, Daejeon 34122 (KR); LEE, Ji Sun, Daejeon 34122 (KR)
(74) Representative: Goddar, Heinz J.
(86) International application number: PCT/KR2024/020298
(87) International publication number: WO 2025/127708

(57) **Abstract**

The present disclosure relates to a secondary battery, and more specifically, to a secondary battery that can be charged and discharged. A secondary battery according to an embodiment of the present disclosure may include an electrode assembly; a pouch-type exterior material having an internal space that accommodates the electrode assembly and an exterior material opening that allows the internal space to communicate with the outside; a cover member inserted into the exterior material opening to seal the internal space; and a gas pocket formed on the pouch-type exterior material to capture gas generated in the internal space.

## Description

### TECHNICAL FIELD

### CROSS-REFERENCE TO RELATED APPLICATIONS

The present application claims priority to Korean Patent Application No. 10-2023-0183578 filed on December 15, 2023 and Korean Patent Application No. 10-2024-0178695 filed on December 4, 2024 in the Republic of Korea, the disclosures of which are incorporated herein by reference.

### TECHNICAL FIELD

The present disclosure relates to a secondary battery, and more specifically, to a secondary battery that can be charged and discharged.

### BACKGROUND ART

A secondary battery (rechargeable battery) is a battery that can be charged and discharged, unlike a primary battery that cannot be recharged. A small secondary battery is used in portable electronic devices such as mobile phones, laptop computers and camcorders, while a medium or large secondary battery is widely used as a power source for driving motors in hybrid vehicles or the like.

The secondary battery may be classified in various ways depending on the type of exterior material that accommodates an electrode assembly. For example, the secondary battery may be classified into a prismatic secondary battery in which an electrode assembly is accommodated inside a prismatic metal can, a cylindrical secondary battery in which an electrode assembly is accommodated inside a cylindrical metal can, and a pouch-type secondary battery in which an electrode assembly is accommodated inside a pouch case.

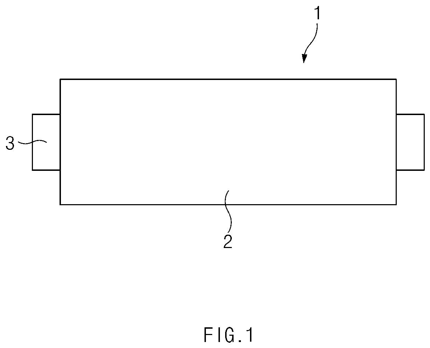

Such a pouch-type secondary battery may be manufactured by bonding a pouch-type case in which a cup portion is formed. FIG. 1 is a view showing an example of a pouch-type secondary battery. The secondary battery 1 of FIG. 1 may include a pouch-type case 2 accommodating an electrode assembly and electrode leads 3 protruding from both sides of the pouch-type case 2. At this time, the cup portion is molded in the pouch-type case 2, and the electrode assembly may be accommodated inside the molded cup portion.

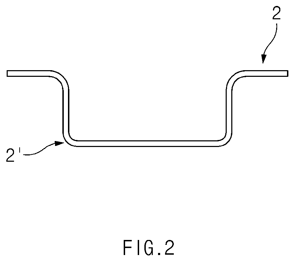

FIG. 2 is a view showing a cup portion of a pouch-type secondary battery. FIG. 2 shows a pouch film 2 that is pressed downward. A cup portion 2' concavely recessed is formed in the pouch film 2. At this time, the molding depth of the cup portion 2' is limited due to the material properties of the pouch film 2. Therefore, it is difficult to mold the cup portion 2' deep enough to increase the capacity of the secondary battery, and as the thickness of the pouch film 2 becomes thinner during the molding of the cup portion 2', there is a problem that defects such as cracks easily occur in the cup portion 2'.

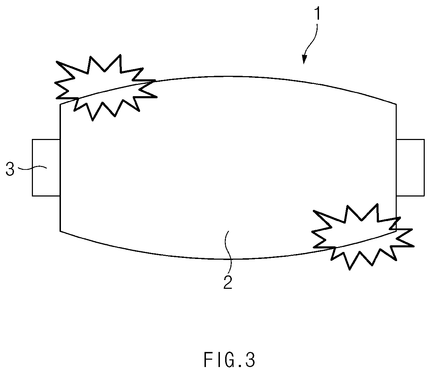

Meanwhile, as the charging and discharging of the pouch-type secondary battery is repeated, gas may be generated inside the pouch-type case. FIG. 3 is a view showing that gas is generated inside a pouch-type secondary battery. FIG. 3 shows that the pouch case 2 is expanded due to the repeated charging and discharging of the secondary battery 1. When this expansion continues, there is a problem that the pouch case 2 may burst to cause the electrolyte inside to leak out, and the high-pressure gas inside to be discharged to the surroundings.

### SUMMARY

### TECHNICAL PROBLEM

The present disclosure is designed to solve the problems of the related art, and therefore the present disclosure is directed to providing a secondary battery capable of solving problems that occur in the process of molding a cup portion in a pouch.

The present disclosure is also directed to providing a secondary battery capable of solving the problem of damage to a pouch case by gas generated inside the pouch case during continuous charging and discharging of the secondary battery.

### TECHNICAL SOLUTION

A secondary battery according to Embodiment 1 of the present disclosure may include an electrode assembly; a pouch-type exterior material having an internal space that accommodates the electrode assembly and an exterior material opening that allows the internal space to communicate with the outside; a cover member inserted into the exterior material opening to seal the internal space; and a gas pocket formed on the pouch-type exterior material to capture gas generated in the internal space.

The pouch-type exterior material may be formed by rolling or folding an exterior material sheet so that one end and the other end of the exterior material sheet including a metal layer meet each other.

One end and the other end of the exterior material sheet may be bonded or fused to each other.

The gas pocket may be connected to the pouch-type exterior material.

One end of the gas pocket may be connected to the pouch-type exterior material, and the other end of the gas pocket may be coupled to the cover member.

The other end of the gas pocket may be coupled to the cover member by adhesion or fusion.

The gas pocket may communicate with the internal space to form a gas capture space that captures gas generated in the internal space.

The gas pocket may have a shape in which an empty hexahedral box is folded.

The gas pocket may include a first folding portion folded in one direction; and a second folding portion connected to the first folding portion and folded in a different direction from the first folding portion.

The secondary battery according to Embodiment 1 of the present disclosure may further include a pulling member that pulls the second folding portion toward the cover member.

The pulling member may include a tape having one end attached to a tip part of the second folding portion and the other end attached to the cover member.

A lead insertion hole into which an electrode lead electrically connected to the electrode assembly is inserted may be formed in the cover member.

An electrolyte injection port for injecting an electrolyte into the internal space may be formed in the cover member.

In a secondary battery according to Embodiment 2 of the present disclosure, a plurality of the gas pockets may be formed in the pouch-type exterior material.

The cover member may have a cuboidal block shape.

Each of the plurality of gas pockets may be in contact with different surfaces of the cover member.

### ADVANTAGEOUS EFFECTS

According to the secondary battery of the present disclosure, since a pouch-type exterior material may be provided without molding a cup portion for accommodating an electrode assembly, there is an advantageous effect of increasing the battery capacity by increasing the size of the pouch-type exterior material, freely selecting the material or thickness of the exterior material sheet for manufacturing the pouch-type exterior material, and preventing defects such as cracks from occurring in the pouch-type exterior material.

Additionally, according to the secondary battery of the present disclosure, a gas pocket that captures gas generated in the internal space is formed in the pouch-type exterior material, and thus there is an advantageous effect of delaying or preventing damage to the pouch due to internal pressure.

### BRIEF DESCRIPTION OF THE DRAWINGS

FIG. 1 is a view showing an example of a pouch-type secondary battery.
FIG. 2 is a view showing a cup portion of a pouch-type secondary battery.
FIG. 3 is a view showing that gas is generated inside a pouch-type secondary battery.
FIG. 4 is a perspective view of a secondary battery according to Embodiment 1 of the present disclosure.
FIG. 5 is an exploded perspective view of a secondary battery according to FIG. 4.
FIG. 6 is a development view of an exterior material sheet constituting a secondary battery according to Embodiment 1 of the present disclosure.
FIG. 7 is a perspective view showing a state in which a second part of an exterior material sheet folded into a cuboidal box shape in a secondary battery according to Embodiment 1 of the present disclosure is provided on the upper side of a cover member.
FIG. 8 is a cross-sectional view taken along the XX' direction of FIG. 7.
FIG. 9 is a cross-sectional view showing a state in which the gas pocket in FIG. 8 is pressed in the AA' direction.
FIG. 10 is a cross-sectional view showing a state in which the gas pocket in FIG. 9 is folded.
FIG. 11 is an enlarged view of part B of FIG. 10.
FIG. 12 is a view for describing a process in which gas in an internal space is captured into a gas pocket in a secondary battery according to Embodiment 1 of the present disclosure.
FIG. 13 is a cross-sectional view showing that a pulling member is attached to a gas pocket in a secondary battery according to Embodiment 1 of the present disclosure.
FIG. 14 is a front view of a secondary battery according to Embodiment 2 of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery according to the present disclosure will be described with reference to the drawings.

### Embodiment 1

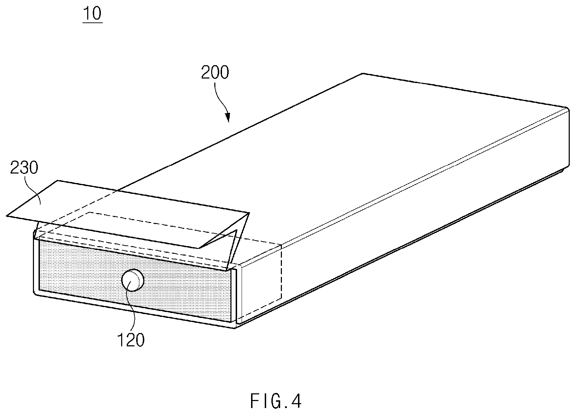

FIG. 3 is a view showing that gas is generated inside a pouch-type secondary battery, and FIG. 4 is a perspective view of a secondary battery according to Embodiment 1 of the present disclosure.

Referring to FIGS. 3 and 4, a secondary battery 10 according to Embodiment 1 of the present disclosure may include an electrode assembly 100; a pouch-type exterior material 200 having an internal space 220 that accommodates the electrode assembly 100 and an exterior material opening 210 that allows the internal space 220 to communicate with the outside; a cover member 300 inserted into the exterior material opening 210 to seal the internal space 220; and a gas pocket 230 formed on the pouch-type exterior material 200 to capture gas generated in the internal space 220.

The electrode assembly 100 is a stack including a positive electrode, a negative electrode and a separator, and may have various structures. For example, the electrode assembly may be a stack type electrode assembly in which a positive electrode, a negative electrode and a separator are stacked in one direction, or a stack-folding type electrode assembly in which a positive electrode, a negative electrode and a separator are stacked in one direction and then folded.

Here, the positive electrode may include a positive electrode current collector and a positive electrode active material coated on the positive electrode current collector, and the negative electrode may include a negative electrode current collector and a negative electrode active material coated on the negative electrode current collector. The separator is an insulating material membrane interposed between the positive electrode and the negative electrode to block contact between the positive electrode and the negative electrode, and a plurality of pores through which positive ions pass may be formed in the separator.

The exterior material 200 is formed by winding an exterior material sheet 200a in one direction, and the internal space 220 for accommodating the electrode assembly 100 may be formed inside the wound exterior material sheet 200a. Additionally, both sides of the internal space 220 may communicate with the outside.

Specifically, the exterior material sheet 200a is a sheet having one end 201a and the other end 202a spaced apart from the one end 201a in a predetermined direction, and the pouch-type exterior material 200 may be formed by rolling or folding the exterior material sheet 200a so that the one end 201a and the other end 202a meet. The one end 201a and the other end 202a of the exterior material sheet 200a may be coupled to each other in various ways. For example, the one end 201a and the other end 202a may be bonded with an adhesive, or the one end 201a and the other end 202a may be thermally fused to each other by receiving heat and pressure.

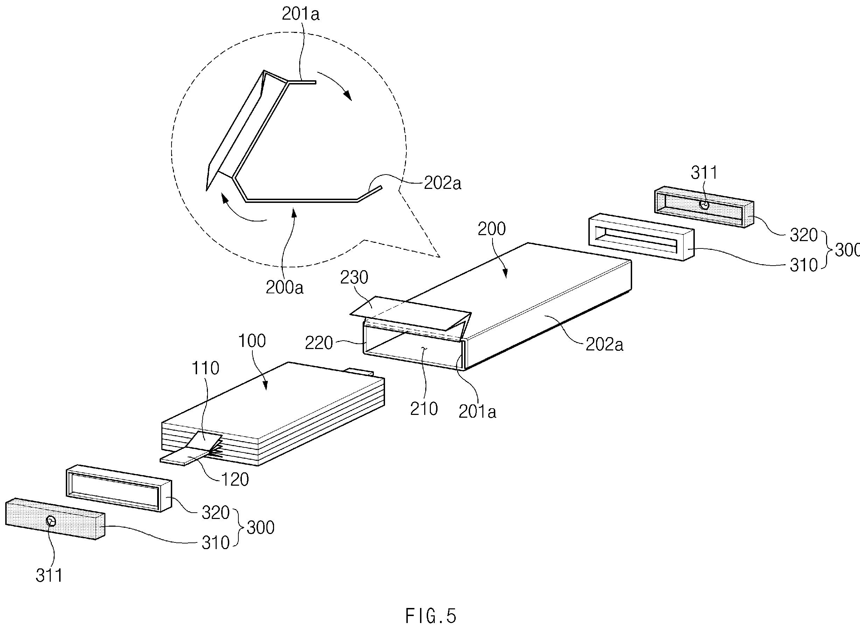

The one end 201a of the exterior material sheet 200a may be coupled to an inner surface or an outer surface of the other end 202a. As shown in FIG. 5, the outer surface of the one end 201a of the exterior material sheet 200a may be coupled to the inner surface of the other end 202a. Additionally, the inner surface of the one end 201a of the exterior material sheet 200a may be coupled to the inner surface of the other end 202a.

Meanwhile, the exterior material sheet 200a may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to a cover member 300 to be described later to seal the internal space 220, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the pouch-type exterior material 200 of the secondary battery 10 according to the present disclosure is prepared by rolling or folding the exterior material sheet 200a, the electrode assembly 100 may be accommodated in the internal space 220 of the pouch-type exterior material 200 without molding a separate cup portion. In this case, the conventional limitation due to the formation of the cup portion in the exterior material is not applied, so that the capacity of the secondary battery 10 may be easily increased by increasing the size of the internal space 220. Additionally, the pouch-type exterior material 200 prepared by rolling or folding the exterior material sheet 200a is not formed with a part that decreases in thickness, and thus the occurrence of defects such as cracks in the pouch-type exterior material 200 may be prevented.

For reference, the secondary battery 10 according to the present disclosure may be formed by seating the electrode assembly 100 on the upper surface of the exterior material sheet 200a in an unfolded state and then rolling or folding the exterior material sheet 200a. Additionally, the secondary battery 10 according to the present disclosure may be formed by rolling or folding the exterior material sheet 200a to form the internal space 220 and the exterior material opening 210 and then inserting the electrode assembly 100 into the exterior material opening 210. In both of the above cases, the electrode assembly 100 may be accommodated inside the pouch-type exterior material 200 without molding a separate cup portion.

Meanwhile, referring to FIGS. 4 and 5, the cover member 300 may be a member that is coupled to the pouch-type exterior material 200 and blocks the exterior material opening 210. The internal space 220 of the pouch-type exterior material 200 in which the electrode assembly 100 is accommodated may be filled with an electrolyte, and the cover member 300 may seal the internal space 220 to prevent the electrolyte from leaking out of the internal space 220.

Specifically, the cover member 300 inserted into the exterior material opening 210 that allows the internal space 220 to communicate with the outside may be coupled to the inner surface of the pouch-type exterior material 200 and the other end 232 of a gas pocket 230 to be described later, thereby sealing the internal space 220 and a gas capture space S to be described later. Here, the inner surface of the pouch-type exterior material 200 may be the second resin layer described above.

Meanwhile, the length of a portion of the cover member 300 inserted into the pouch-type exterior material 200 may be formed in various ways. For example, as shown in FIGS. 4 and 5, only a portion of the cover member 300 may be inserted into the pouch-type exterior material 200, so that the remaining portion of the cover member 300 may be exposed to the outside of the pouch-type exterior material 200.

Additionally, the cover member 300 may be made of a material that is not easily permeable to moisture. For example, the cover member 300 may be obtained from metal or resin, or may be obtained from a laminate sheet in which a resin layer is formed on both surfaces of a metal layer.

The cover member 300 may have various shapes. For example, the cover member 300 may be composed of a body 310 and a gasket 320 to transversely block the internal space 220 of the exterior material 200. Specifically, a through hole 311 through which a gas lead 120 passes may be formed in the body 310. The gasket 320 is a member that surrounds the body 310 and may prevent electrolyte leakage between the exterior material 200 and the body 310. In this case, the gasket 320 may serve as a medium for a rigid coupling between the exterior material 200 and the body 310.

This gasket 320 may have various shapes. For example, the gasket 320 may have a picture frame shape that surrounds a side surface of the outer surface of the body 310. Additionally, the gasket 320 may be formed to surround both the inner and outer surfaces of the body 310.

Meanwhile, the cover member 300 may be coupled to the inner surface of the pouch-type exterior material 200 and the other end 232 of the gas pocket 230 in various ways. For example, the cover member 300 may be coupled to the inner surface of the pouch-type exterior material 200 and the other end 232 of the gas pocket 230 by an adhesive, or the cover member 300 may be thermally fused to the inner surface of the pouch-type exterior material 200 and the other end 232 of the gas pocket 230.

The gas pocket 230 is for capturing gas generated in the internal space 220 by charging and discharging of the secondary battery 10, and may be formed in the pouch-type exterior material 200. In this case, the gas generated in the internal space 220 is captured in the gas pocket 230, and thus there is an advantageous effect of preventing the swelling or tearing of the pouch-type exterior material 200 even when gas is generated in the internal space 220.

Meanwhile, the gas pocket 230 is made of the same material as the pouch-type exterior material 200 and may be connected to the pouch-type exterior material 200. That is, the gas pocket 230 may be composed of a laminate sheet including a metal layer such as aluminum or stainless steel. At this time, a resin layer may be formed on each of the outer and inner surfaces of the metal layer.

A lead insertion hole 311 into which an electrode lead 120 electrically connected to the electrode assembly 100 is inserted may be formed in the body 310 of the cover member 300. The electrode lead 120 is coupled to the electrode tab 110 connected to each of electrode uncoated portions of the electrodes stacked in the electrode assembly 100, and a portion of the electrode lead 120 may be exposed to the outside of the secondary battery 10. Here, the lead insertion hole 311 may have a shape corresponding to the shape of the electrode lead 120 being inserted.

Meanwhile, a sealing member such as an O-ring may be interposed between the lead insertion hole 311 and the electrode lead 120, or a sealant layer made of a thermoplastic resin may be formed. In this case, the electrolyte injected into the internal space 220 may be prevented from leaking through the lead insertion hole 311.

An electrolyte injection port for injecting the electrolyte into the internal space 220 may be formed in the cover member 300. Here, the electrolyte injection port may be a through hole penetrating the cover member 300.

An electrolyte injection process for injecting the electrolyte into the internal space 220 of the secondary battery 10 may be performed through this electrolyte injection port. For example, the user may inject the electrolyte into the internal space 220 through the electrolyte injection port in a state of disposing the secondary battery 10 so that the cover member 300 in which the electrolyte injection port is formed faces upward.

Additionally, a degassing process for discharging gas generated during activation of the secondary battery 10 to the outside may be performed through the electrolyte injection port. For example, the user may open the electrolyte injection port to induce the discharge of gas in the internal space 220.

After the electrolyte injection process or the degassing process, the electrolyte injection port may be sealed or welded to seal the internal space 220. Additionally, it is also possible to open the electrolyte injection port only when necessary, by installing a valve capable of opening and closing the electrolyte injection port.

On the other hand, the conventional pouch-type secondary battery has a gas pocket formed by rolling up a portion of the exterior material, and the gas pocket is removed from the exterior material after capturing the internal gas of the exterior material, so that there is conventionally a problem that a portion of the exterior material is repeatedly discarded. In this regard, the secondary battery 10 according to the present disclosure includes an electrolyte injection port formed in the cover member 300, and the user may inject an electrolyte into the internal space 220 and discharge gas from the internal space 220 to the outside through such an electrolyte injection port, thereby solving the conventional problem that a portion of the exterior material is repeatedly discarded.

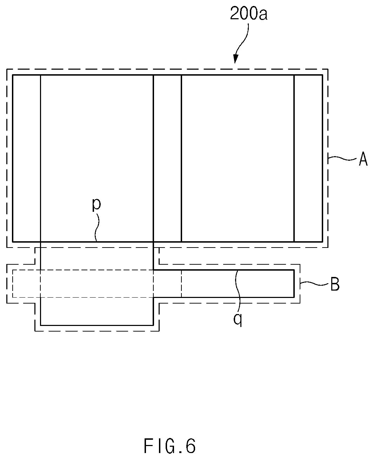

FIG. 6 is a development view of an exterior material sheet constituting a secondary battery according to Embodiment 1 of the present disclosure. Referring to FIG. 6, the exterior material sheet 200a may be composed of a first part A that is rolled or folded in one direction to form the pouch-type exterior material 200 and a second part B that is folded into a cuboidal box shape to form the gas pocket 230. At this time, as shown in FIG. 6, the first part A and the second part B may be connected to each other.

The second part B may be folded into a cuboidal box shape to form the gas pocket 230, and the gas capture space S inside the gas pocket 230 may be connected to the internal space 220 of the pouch-type exterior material 200. To this end, when the second part B is folded into a cuboidal box shape, the two edges (p, q) shown in FIG. 6 may remain uncoupled to each other.

Specifically, when the second part B is folded into a cuboidal box shape, the two edges (p, q) face each other, and here, the two edges (p, q) may be maintained in a separated state without being coupled to each other. The two edges (p, q) may be one end 231 and the other end 232 of the gas pocket 230 to be described later, respectively.

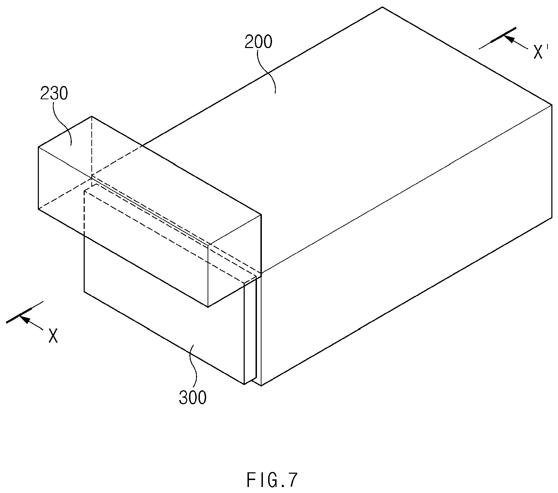

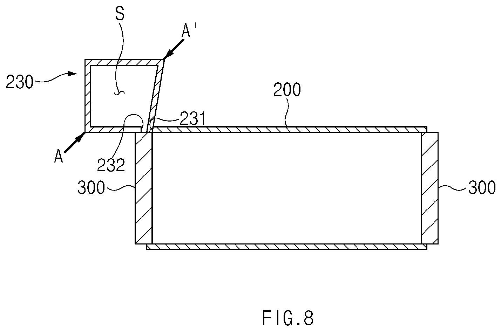

Meanwhile, FIG. 7 is a perspective view showing a state in which a second part of an exterior material sheet folded into a cuboidal box shape in a secondary battery according to Embodiment 1 of the present disclosure is provided on the upper side of a cover member, and FIG. 8 is a cross-sectional view taken along the XX' direction of FIG. 7.

Referring to FIGS. 7 and 8, the second part B described above may be folded to have a gas pocket 230 having a cuboidal box shape. The gas pocket 230 is provided on the upper side of the cover member 300, and one end 231 and the other end 232 of the gas pocket 230 may be separated from each other. Here, one end 231 of the gas pocket 230 may be connected to the pouch-type exterior material 200, and the other end 232 of the gas pocket 230 may be coupled to the cover member 300.

Specifically, one end 231 of the gas pocket 230 is supported by the other end 232 of the gas pocket 230, but the one end 231 and the other end 232 are not bonded to each other, and thus the one end 231 may be separated from the other end 232 when the internal pressure of the secondary battery 10 increases. When the internal pressure of the secondary battery 10 increases, the internal gas of the secondary battery 10 may flow into the gas capture space S through the space between the one end 231 and the other end 232.

In this case, the gas capture space S formed inside the gas pocket 230 may communicate with the internal space 220 formed by the pouch-type exterior material 200. As the cover member 300 is coupled to the pouch-type exterior material 200 and the gas pocket 230, the gas capture space S and the internal space 220 may be sealed from the outside. That is, the cover member 300 may be a sealing member that seals the gas capture space S and the internal space 220.

Meanwhile, the other end 232 of the gas pocket 230 may be coupled to the cover member 300 in various ways. For example, the other end 232 of the gas pocket 230 may be coupled to the cover member 300 by adhesion or fusion.

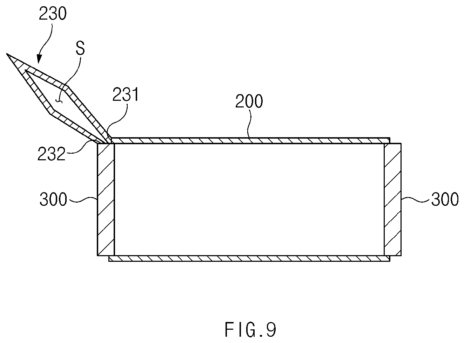

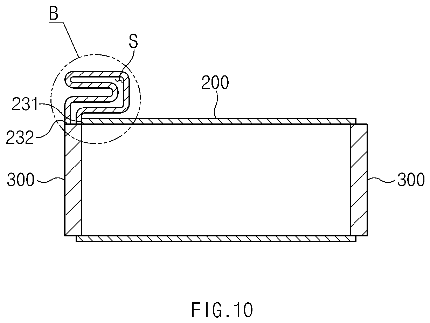

Meanwhile, FIG. 9 is a cross-sectional view showing a state in which the gas pocket in FIG. 8 is pressed in the AA' direction, and FIG. 10 is a cross-sectional view showing a state in which the gas pocket in FIG. 9 is folded. Referring to FIGS. 8 to 10, the gas pocket 230 in the shape of an empty cuboidal box may be pressed flat by being pressurized from both sides and then folded in a zigzag shape to be provided on the upper side of the pouch-type exterior material 200 and the cover member 300.

In this case, the gas pocket 230 is folded in a zigzag shape in a state of being pressed flat, and thus the volume occupied by the gas pocket 230 in the secondary battery 10 is reduced. That is, the overall volume of the secondary battery 10 is reduced, and thus there is an advantageous effect of reconsidering the space utilization of a space in which the secondary battery 10 is installed (e.g., a battery module, a battery pack, or an internal space of an electronic device).

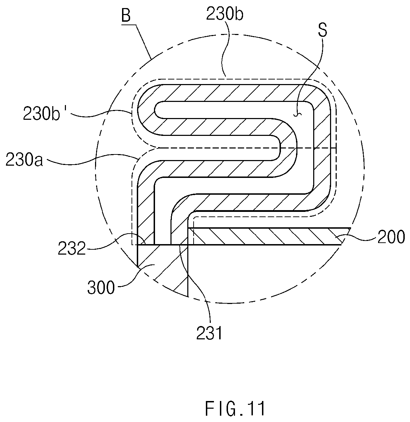

Meanwhile, FIG. 11 is an enlarged view of part B of FIG. 10. FIG. 11 shows a first folding portion 230a and a second folding portion 230b. Specifically, the gas pocket 230 may include a first folding portion 230a folded in one direction; and a second folding portion 230b connected to the first folding portion 230a and folded in a different direction from the first folding portion 230a.

The first folding portion 230a is a portion of the gas pocket 230 that is folded from the upper side of the cover member 300 toward the upper side of the pouch-type exterior material 200, and the first folding portion 230a may include one end 231 and the other end 232 of the gas pocket 230. The second folding portion 230b is a portion of the gas pocket 230 that is folded from the upper side of the pouch-type exterior material 200 toward the upper side of the cover member 300, and the second folding portion 230b may be connected to the first folding portion 230a.

That is, the gas pocket 230 may be folded in a zigzag shape and provided on the upper side of the pouch-type exterior material 200 and the cover member 300. In this case, there is an advantageous effect of minimizing the volume of the gas pocket 230 in a state where no gas flows into the gas capture space S.

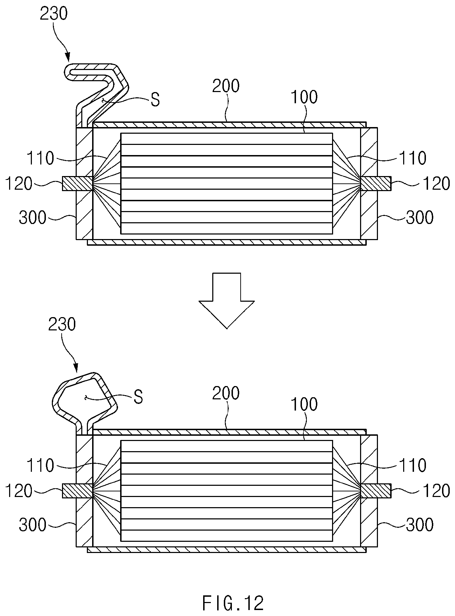

Meanwhile, FIG. 12 is a view for describing a process in which gas in an internal space is captured into a gas pocket in a secondary battery according to Embodiment 1 of the present disclosure. FIG. 12 shows that gas generated in the internal space 220 flows into the gas capture space S of the gas pocket 230 according to charging and discharging of the secondary battery 10.

As a result, the gas pocket 230 in the folded state expands, and the internal pressure of the internal space 220 remains constant while the gas pocket 230 expands, so that an increase in the pressure of the internal space 220 may be prevented or delayed. In this case, there is an advantageous effect of preventing or delaying the expansion or tearing of the pouch-type exterior material 200 due to an increase in the pressure of the internal space 220.

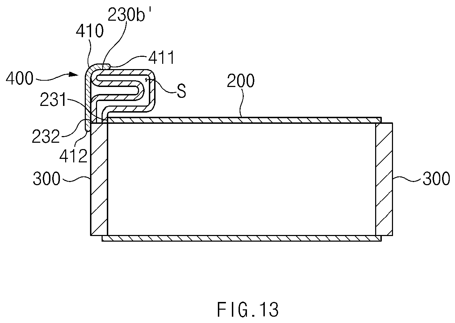

Meanwhile, FIG. 13 is a cross-sectional view showing that a pulling member is attached to a gas pocket in a secondary battery according to Embodiment 1 of the present disclosure. Referring to FIG. 13, the secondary battery 10 according to Embodiment 1 of the present disclosure may further include a pulling member 400 that pulls the second folding portion 230b toward the cover member 300. The pulling member 400 pulls the second folding portion 230b toward the cover member 300, and thus the gas pocket 230 in a folded state may be brought into close contact with the cover member 300. That is, the gas pocket 230 in a state where no gas is captured in the gas capture space S is brought into close contact with the cover member 300, and thus there is an advantageous effect of reducing the overall volume of the secondary battery 10.

The pulling member 400 may be a tape 410 having one end 411 attached to the tip part 230b' of the second folding portion 230b and the other end 412 attached to the cover member 300. Here, the coupling between the one end 411 of the tape 410 and the tip part 230b' of the second folding portion 230b may be released as gas is captured in the gas capture space S. Additionally, the coupling between the other end 412 of the tape 410 and the cover member 300 may be released as gas is captured in the gas capture space S.

Specifically, as gas generated in the internal space 220 flows into the gas capture space S, the gas pocket 230 in a folded state may expand. When the gas pocket 230 expands and increases in volume, the tape 410 may no longer bring the gas pocket 230 into close contact with the cover member 300 side. That is, as the gas pocket 230 expands, the coupling between the one end 411 of the tape 410 and the tip part 230b' of the second folding portion 230b may be released, or the coupling between the other end 412 of the tape 410 and the cover member 300 may be released.

In this case, when gas flows into the gas capture space S, the adhesive bonding of the tape 410 is released, and thus there is an advantageous effect of reducing the volume of the gas pocket 230 by bringing the gas pocket 230 into close contact with the cover member 300 side in normal times without interfering with the gas being captured in the gas capture space S.

### Embodiment 2

A secondary battery according to Embodiment 2 of the present disclosure differs from Embodiment 1 in that it includes a plurality of gas pockets. The contents common to Embodiment 1 will be omitted as much as possible, and Embodiment 2 will be described focusing on the differences. That is, it is obvious that contents not described in Embodiment 2 may be regarded as contents of Embodiment 1 if necessary.

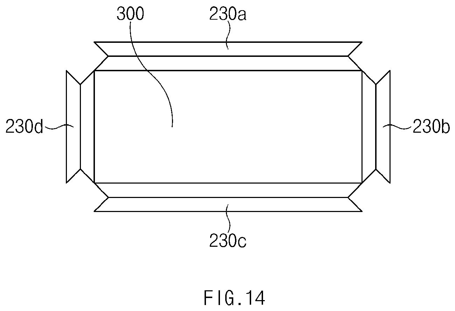

FIG. 14 is a front view of a secondary battery according to Embodiment 2 of the present disclosure. FIG. 14 shows a state in which a plurality of gas pockets 230a, 230b, 230c, 230d are coupled to a cover member 300. A secondary battery 10 according to Embodiment 2 of the present disclosure may include an electrode assembly 100; a pouch-type exterior material 200 having an internal space 220 that accommodates the electrode assembly 100 and an exterior material opening 210 that allows the internal space 220 to communicate with the outside; a cover member 300 inserted into the exterior material opening 210 to seal the internal space 220; and a plurality of gas pockets 230a, 230b, 230c, 230d formed on the pouch-type exterior material 200 to capture gas generated in the internal space 220. That is, a gas capture space for capturing gas generated in the internal space 220 may be formed in each of the plurality of gas pockets 230a, 230b, 230c, 230d.

At this time, one end of each of the plurality of gas pockets 230a, 230b, 230c, 230d may be connected to the pouch-type exterior material 200. That is, the plurality of gas pockets 230a, 230b, 230c, 230d may be formed in the pouch-type exterior material 200. In this case, a plurality of free spaces capable of capturing gas generated in the internal space 220 are formed in the secondary battery 10, which may effectively prevent the venting or tearing of the pouch-type exterior material 200 even when a large amount of internal gas is generated.

Meanwhile, in the secondary battery 10 according to Embodiment 2 of the present disclosure, the cover member 300 may have a cuboidal block shape. At this time, each of the plurality of gas pockets 230a, 230b, 230c, 230d may be in contact with different surfaces of the cover member 300. Specifically, one end of each of the plurality of gas pockets 230a, 230b, 230c, 230d may be coupled to different surfaces of the cover member 300. Here, one end of each of the plurality of gas pockets 230a, 230b, 230c, 230d may be coupled to the cover member 300 by adhesion or fusion.

Each of the plurality of gas pockets 230a, 230b, 230c, 230d may have a shape in which an empty hexahedral box is folded. Specifically, each of the plurality of gas pockets 230a, 230b, 230c, 230d may include a first folding portion folded in one direction and a second folding portion folded in a different direction from the first folding portion.

Additionally, the secondary battery 10 according to Embodiment 2 of the present disclosure may further include a pulling member that pulls each of the plurality of gas pockets 230a, 230b, 230c, 230d toward the cover member 300. Here, the pulling member may include a plurality of tapes that are attached to each of the plurality of gas pockets 230a, 230b, 230c, 230d. Specifically, one end of each of the tapes may be attached to a tip part of each of the plurality of gas pockets 230a, 230b, 230c, 230d, and the other end of each of the tapes may be attached to the cover member 300.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

**[List of Reference Numerals]**

| | | | |
|---|---|---|---|
| 10: | Secondary battery | 100: | Electrode assembly |
| 110: | Electrode tab | 120: | Electrode lead |
| 200: | Exterior material | 201: | Pocket forming portion |
| 202: | Space forming portion | 200a: | Exterior material sheet |
| 201a: | One end of exterior material sheet | 202a: | The other end of exterior material sheet |
| 210: | Exterior material opening | 220: | Internal space |
| 230: | Gas pocket | 230a: | First folding portion |
| 230b: | Second folding portion | 300: | Cover member |
| 310: | Body | 320: | Gasket |
| 400: | Pulling member | 410: | Tape |

## Claims

1. A secondary battery comprising:
an electrode assembly;
a pouch-type exterior material having an internal space that accommodates the electrode assembly and an exterior material opening that allows the internal space to communicate with the outside;
a cover member inserted into the exterior material opening to seal the internal space;
and
a gas pocket formed on the pouch-type exterior material to capture gas generated in the internal space.

2. The secondary battery according to claim 1,
wherein the pouch-type exterior material is formed by rolling or folding an exterior material sheet so that one end and the other end of the exterior material sheet comprising a metal layer meet each other.

3. The secondary battery according to claim 2,
wherein one end and the other end of the exterior material sheet are bonded or fused to each other.

4. The secondary battery according to claim 1,
wherein the gas pocket is connected to the pouch-type exterior material.

5. The secondary battery according to claim 4,
wherein one end of the gas pocket is connected to the pouch-type exterior material, and
the other end of the gas pocket is coupled to the cover member.

6. The secondary battery according to claim 5,
wherein the other end of the gas pocket is coupled to the cover member by adhesion or fusion.

7. The secondary battery according to claim 1,
wherein the gas pocket communicates with the internal space to form a gas capture space that captures gas generated in the internal space.

8. The secondary battery according to claim 1,
wherein the gas pocket has a shape in which an empty hexahedral box is folded.

9. The secondary battery according to claim 8,
wherein the gas pocket comprises:
a first folding portion folded in one direction; and
a second folding portion connected to the first folding portion and folded in a different direction from the first folding portion.

10. The secondary battery according to claim 9, further comprising:
a pulling member that pulls the second folding portion toward the cover member.

11. The secondary battery according to claim 10,
wherein the pulling member comprises a tape having one end attached to a tip part of the second folding portion and the other end attached to the cover member.

12. The secondary battery according to claim 1,
wherein a lead insertion hole into which an electrode lead electrically connected to the electrode assembly is inserted is formed in the cover member.

13. The secondary battery according to claim 1,
wherein an electrolyte injection port for injecting an electrolyte into the internal space is formed in the cover member.

14. The secondary battery according to claim 1,
wherein a plurality of the gas pockets are formed in the pouch-type exterior material.

15. The secondary battery according to claim 14,
wherein the cover member has a cuboidal block shape.

16. The secondary battery according to claim 15,
wherein each of the plurality of gas pockets is in contact with different surfaces of the cover member.
